# EUROPEAN PATENT SPECIFICATION

(11) **EP 4 599 532 B1**
(45) Date of publication and mention of the grant of the patent: **13.05.2026**
(21) Application number: 24821700.2
(22) Date of filing: 21.11.2024
(51) Int. Cl.: H04J 3/06, H04L 41/12, H04L 45/12

(54) **SYSTEM AND METHOD TO DISCOVER CANDIDATE PTP CLOCK SOURCE(S) OVER IP/MPLS NETWORK**
SYSTEM UND VERFAHREN ZUR ERKENNUNG VON PTP-TAKTQUELLE(N) IN KANDIDATEN ÜBER EIN IP/MPLS-NETZWERK
SYSTÈME ET PROCÉDÉ POUR DÉCOUVRIR UNE OU PLUSIEURS SOURCES D'HORLOGE PTP CANDIDATES SUR UN RÉSEAU IP/MPLS

(30) Priority: 30.11.2023 IN 202311081663; 23.01.2024 US 202418419810
(43) Date of publication of application: 13.08.2025
(73) Proprietor: Ciena Corporation, Hanover, MD 21076-1426 (US)
(72) Inventor: SRIVASTAVA, Sharad Kumar, Varanasi, UP (IN); GARG, Vineet Kumar, 122505 Gurgaon (IN); SINGH, Krishan, 123401 Haryana (IN); CHAUHAN, Vijendra States, 452012 Indore (IN)
(74) Representative: Dehns
(86) International application number: PCT/US2024/056902
(87) International publication number: WO 2025/117329

(56) References cited:
- EP-A1- 2 782 290
- US-A1- 2012 069 943
- US-A1- 2013 039 220
- US-A1- 2023 057 463

## Description

### CROSS-REFERENCE TO RELATED APPLICATION(S)

The present application claims priority to U.S. Patent Application Serial No. 18/419,810, filed January 23, 2024, which claims priority under 35 U.S.C. §1.119 to Indian patent application no. 202311081663, filed on November 30, 2023.

### FIELD OF THE DISCLOSURE

The subject disclosure relates to a system and method to discover candidate precision timing protocol (PTP) master clock sources over an Internet Protocol (IP)/multi-protocol label switching (MPLS) network.

### BACKGROUND

PTP has become critical to deliver synchronization of radios in modern cellular networks, such as fifth generation (5G) networks. 5G networks have been rapidly evolving into a fully automated network. Today a network administrator needs to manually provision an IP address for a candidate master clock to enable PTP synchronization of node over IP. Furthermore, the administrator must manually provision such IP address(es) whenever a list of potential master clock changes. EP 2 782 290 A1 describes a method, system and apparatus for implementing hybrid networking of multiple clock synchronization technologies. US 2023/057463 A1 describes network timing topology discovery and visualization using interior gateway protocols. US 2012/069943 describes a SCAN-REQ/RSP message exchange process comprising a Master GPS Locked Advertisement Message and a Master Holdover Advertisement Message transmitted by a master.

### BRIEF DESCRIPTION OF THE DRAWINGS

Reference will now be made to the accompanying drawings, which are not necessarily drawn to scale, and wherein:
**FIG. 1** is a block diagram illustrating an exemplary, non-limiting embodiment of precision time protocol nodes in a network in accordance with various aspects described herein.
**FIG. 2** is a block diagram illustrating an exemplary, non-limiting embodiment of precision time protocol nodes in an OSPF network in accordance with various aspects described herein.

Reference will now be made to the accompanying drawings, which are not necessarily drawn to scale, and wherein:

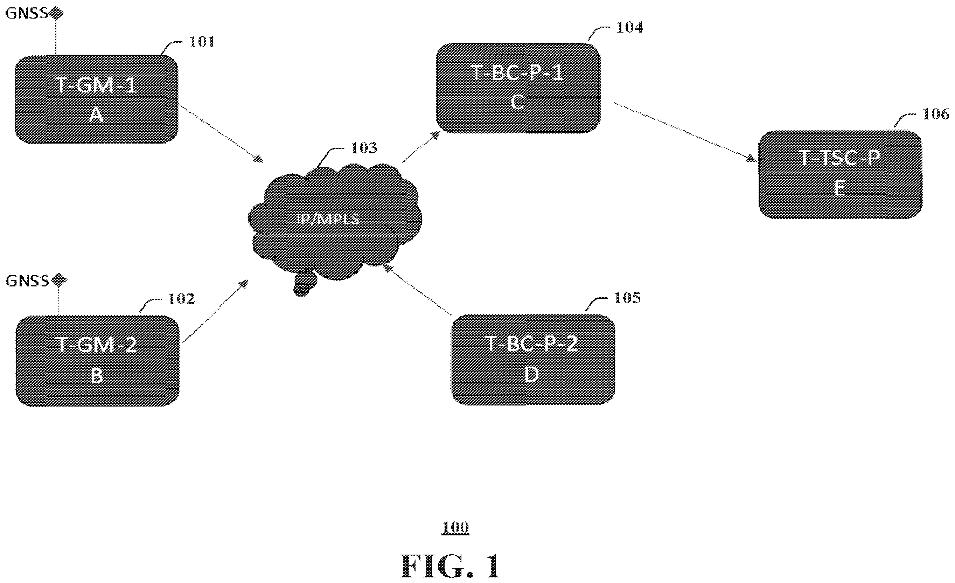

**FIG. 1** is a block diagram illustrating an exemplary, non-limiting embodiment of precision time protocol nodes in a network in accordance with various aspects described herein.

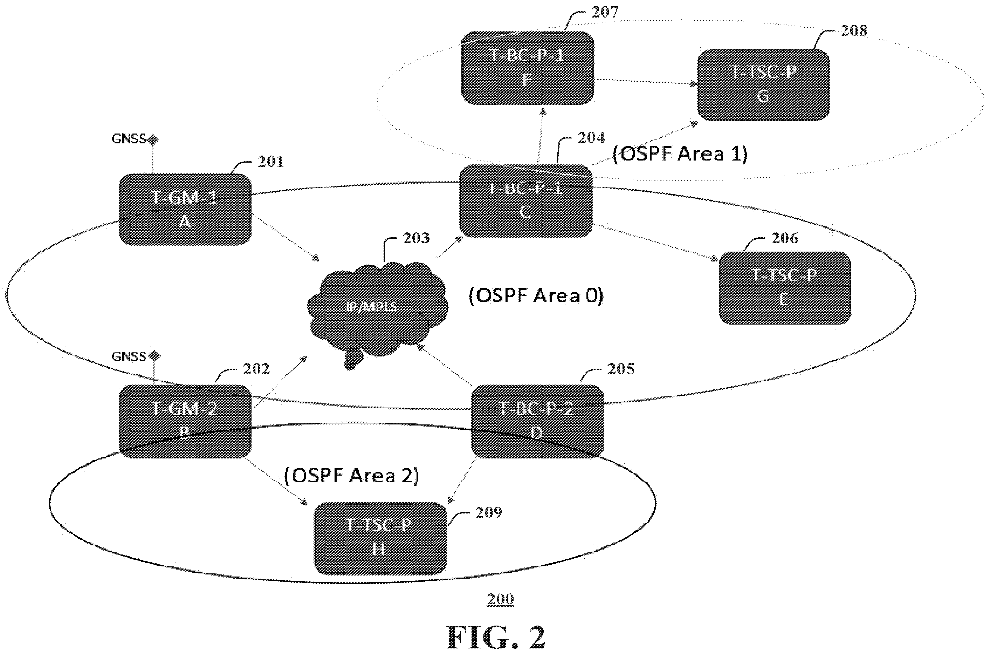

**FIG. 2** is a block diagram illustrating an exemplary, non-limiting embodiment of precision time protocol nodes in an OSPF network in accordance with various aspects described herein.

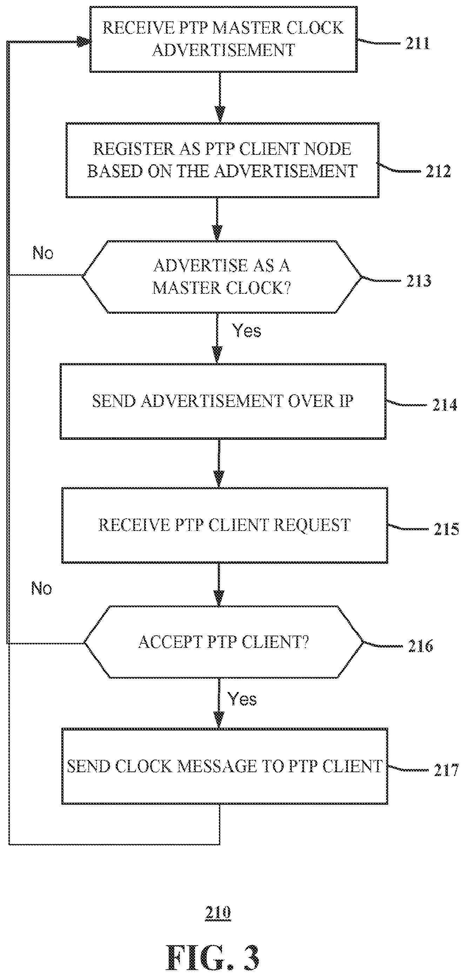

**FIG. 3** depicts an illustrative embodiment of a method performed by a node in an IP network in accordance with various aspects described herein.

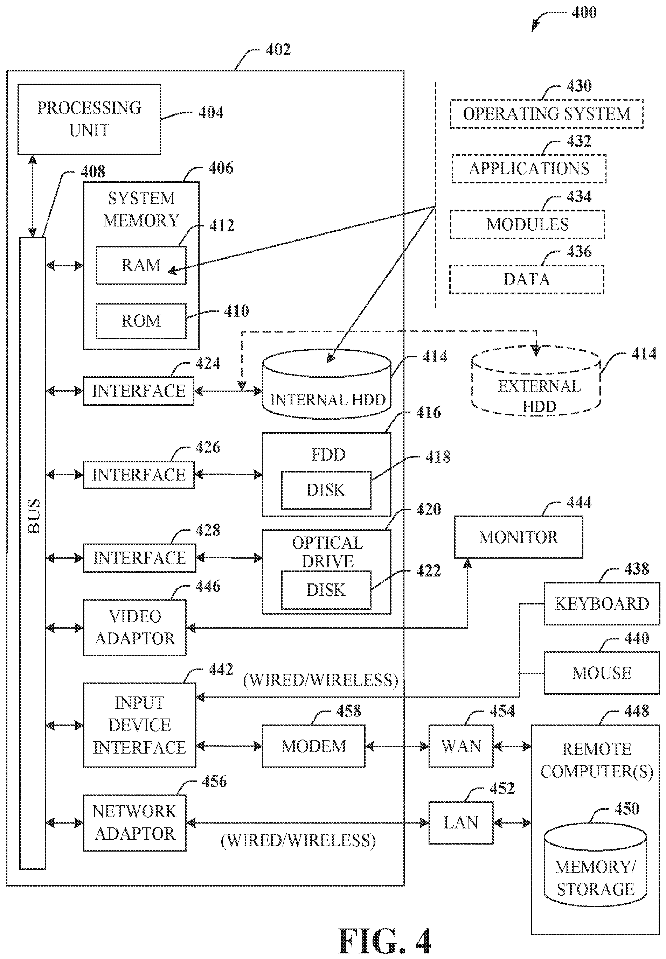

**FIG. 4** is a block diagram of an example, non-limiting embodiment of a computing environment in accordance with various aspects described herein.

### DETAILED DESCRIPTION

The subject disclosure describes, among other things, illustrative embodiments for a precision time protocol master clock advertising its capabilities over Internet Protocol networks. Other embodiments are described in the subject disclosure.

One embodiments includes a device according to appended clainm 1.

One or more aspects of the subject disclosure, not part of the scope of the invention, include a device, having: a processing system including a processor; a clock; and a memory that stores executable instructions that, when executed by the processing system, facilitate performance of operations, the operations comprising: identifying a first precision timing protocol (PTP) master clock through a message received in an Internet Protocol (IP) network; registering as a PTP client node with the first PTP master clock through a unicast signaling mechanism; advertising a capability as a second PTP master clock through the IP network, wherein the advertising includes an IP address of the device; receiving a second unicast signaling mechanism from a second PTP client node in the IP network; and sending first clock messages to the PTP client node responsive to accepting the second PTP client node.

One or more aspects of the subject disclosure, not part of the scope of the invention, include a non-transitory. machine-readable medium, comprising executable instructions that, when executed by a processing system including a processor, facilitate performance of operations, the operations including: identifying a first precision timing protocol (PTP) master clock from a message received in an Internet Protocol (IP) network; registering as a first PTP client node with the first PTP master clock; synchronizing a clock with first clock messages received from the first PTP master clock; advertising a capability as a second PTP master clock through the IP network; receiving a request from a second node in the IP network to become a second PTP client node; and sending second clock messages to the second PTP client node responsive to accepting the second PTP client node.

ITU-T has defined two telecommunications standards, namely G.8265.1 and G.8275.2, for the frequency recovery and phase recovery, respectively, in IP networks. These standards propose a unicast discovery option defined by IEEE 1588 (sec 16.1) to allow a PTP client to contact a master clock in a network that does not offer multicasting. The PTP client uses unicast negotiations to discover the best master available over an IP network. This mechanism requires a manual configuration of the client node with the IP addresses of all the available master clocks. Once the master clock IP address is configured on the PTP client node, the PTP client node starts unicast negotiations by sending signaling request messages for announce, sync and delay information provided by the PTP master clock.

**FIG. 1** is a block diagram illustrating an exemplary, non-limiting embodiment of precision time protocol nodes in a network in accordance with various aspects described herein. As shown in FIG. 1, network 100 includes two master clock nodes 101, 102, an IP/MPLS cloud 103, two boundary clock nodes 104, 105 and a client node 106. Master clock nodes 101 and 102 synchronize their clocks using time information from a time source, such as a Global Navigation Satellite Service (GNSS) receiver. Normally, a system administrator would have to provision nodes 104 and 105 as PTP client nodes having IP address of nodes 101 and 102 as candidate master clocks. Furthermore, nodes 104 and 105 would also be provisioned as having master clock functionality. Finally, node 106 would be provisioned as a client node having the IP address of node 104 as a candidate master clock.

In an embodiment, an administrator would not have to provision nodes 104, 105 and 106 with IP addresses of candidate master clock nodes. Instead, nodes 104, 105 and 106 would learn which hosts (e.g., nodes 101, 102, 104 and 105) have an advertised PTP master capability. Based on this information, client nodes can start a PTP unicast signaling mechanism over IP/MPLS cloud 103 to master clock nodes at the IP addresses advertised. In an embodiment, a node that has advertised this capability using Interior Gateway Protocol (IGP) would receive a unicast signaling request and can decide whether to grant the request for service or not in the usual fashion. Based on the signaling mechanism, client nodes can start getting announcement messages from potential master clock nodes and then decide which is the best master clock based on IEEE-1588 / profile specific state machine and the Best Master Clock Algorithm (BMCA).

In an embodiment, the system sends the announcement messages using Intermediate System to Intermediate System (ISIS) or Open Shortest Path First (OSPF) via IGP. In a case where some of the candidate master clock nodes are not within an ISIS or OSPF area of reachability, an administrator can manually configure the IP address as usual. However, it is also important to note that for telecom applications based on G.8275.2 recommended clocking architectures, candidate master clocks are generally within few IP hops from client nodes and thereby very likely to be within same ISIS or OSPF domain as the client nodes. For OSPF, a router can send PTP master clock capabilities via router information in an opaque Link State Advertisement (LSA).

**FIG. 2** is a block diagram illustrating an exemplary, non-limiting embodiment of precision time protocol nodes in an OSPF network in accordance with various aspects described herein. As shown in FIG. 2, network 200 includes two master clock nodes 201, 202, an IP/MPLS cloud 203, two boundary clock nodes 204, 205 and client nodes 206, 207, 208 and 209. Nodes 201, 202, 204, 205 and 206 are withing OSPF Area 0. Nodes 204, 207 and 208 are within OSPF Area 1, and nodes 202, 205 and 209 are within OSPF Area 2. In an embodiment, OSPF propagation for PTP capability will be limited within an OSPF area and will not be flooded in other areas. In case of clocking networks spanning across many OSPF areas, area border routers (ABRs) can act as boundary clocks, such that they can lock to candidate master clock nodes in one area and also advertise themselves as master clock nodes for adjacent areas that they serve.

For example, master clock nodes 201 and 202 are both advertised as candidate PTP master clock nodes in Area 0 but not advertised in OSPF Area 1. However, node 204, which is an ABR between Area 0 and Area 1, will recognize nodes 201 and 202 as candidate master clock nodes through OSPF. Similarly, node 204 can advertise itself as a candidate master clock in Area 1, so that PTP client nodes like nodes 207 and 208 can lock onto it. As per PTP protocol, node 204 will advertise a holdover (or free run as the case may be) clock class to its clients in area 1 until node 204 is locked to a master clock in Area 0.

Each ABR working as boundary clock can propagate clock information by advertising itself as candidate master in downstream OSPF areas. This process prevents clock synchronization capability from flooding across OSPF areas. However, an administrator can still manually configure a client with an IP address of a master clock node outside of its own area without taking advantage of the mechanism proposed here.

In another embodiment, ISIS can advertise a new link state protocol (LSP) data unit (sub-TLV) in the following format for loopback IP interfaces:
- IP interface PTP master role flag
- Type: (new type)
- Length: 1
- Value: 0 or 1 (PTP Master Role advertisement flag False/True)

In an ISIS-based IGP domain, a PTP master clock would advertise its capability via sub-TLV contained in the sub-TLV of ISIS IP reachability extensions. This capability can be limited to being intra-level to ISIS levels and an ISIS L1/L2 router can be a boundary block if clock has to traverse multiple ISIS levels. This is similar to the proposal detailed above for OSPF case.

**FIG. 3** depicts an illustrative embodiment of a method performed by a node in an IP network in accordance with various aspects described herein. As shown in FIG. 3, method 210 begins at step 211 where a node in an IP network receives information sent over IGP about a node advertising its ability to provide PTP master clock service to any clients. Next in step 212, the node sends a message to the PTP master clock node indicating that the node wishes to register as a PTP client based on the information received. The node, having been accepted by the PTP master clock node as a client, receives clock messages from the PTP master clock node, and can synchronize its clock using the messages if the PTP master clock node is selected as the best master clock under BMCA. Next, in step 213, the node determines whether it will advertise itself as a PTP master clock node. If not, then the process repeats at step 211.

But if so, then the process continues at step 214, where the node sends out an advertisement that it is a PTP master clock node. Next in step 215, the node receives a request from a potential PTP client node seeking to become a PTP client. In step 216, the node considers whether to accept the potential PTP client node as a client. If not, then the process repeats at step 211. But if so, then in step 217 the node sends clock messages to the newly accepted PTP client node, and the process repeats at step 211.

While for purposes of simplicity of explanation, the respective processes are shown and described as a series of blocks in FIG. 3, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methods described herein.

Turning now to **FIG. 4****,** there is illustrated a block diagram of a computing environment in accordance with various aspects described herein. In order to provide additional context for various embodiments of the embodiments described herein, FIG. 4 and the following discussion are intended to provide a brief, general description of a computing environment 400, that, when combined with specific equipment such as a GNSS receiver, a timing subsystem including PLL, a forwarding switch / ASIC for Ethernet or IP/MPLS processing capability to support PTP, etc., would be suitable for implementing the various embodiments of the subject disclosure. For example, computing environment 400 can facilitate in whole or in part sending advertisements identifying PTP master clocks in an IP network; registering PTP client nodes through a unicast signaling mechanism; and sending clock messages to PTP client nodes, etc.

Generally, program modules comprise routines, programs, components, data structures, etc., that perform particular tasks or implement particular abstract data types. Moreover, those skilled in the art will appreciate that the methods can be practiced with other computer system configurations, comprising single-processor or multiprocessor computer systems, minicomputers, mainframe computers, as well as personal computers, hand-held computing devices, microprocessor-based or programmable consumer electronics, and the like, each of which can be operatively coupled to one or more associated devices.

As used herein, a processing circuit includes one or more processors as well as other application specific circuits such as an application specific integrated circuit, digital logic circuit, state machine, programmable gate array or other circuit that processes input signals or data and that produces output signals or data in response thereto. It should be noted that while any functions and features described herein in association with the operation of a processor could likewise be performed by a processing circuit.

The illustrated embodiments of the embodiments herein can also be practiced in distributed computing environments where certain tasks are performed by remote processing devices that are linked through a communications network. In a distributed computing environment, program modules can be located in both local and remote memory storage devices.

Computing devices typically comprise a variety of media, which can comprise computer-readable storage media and/or communications media, which two terms are used herein differently from one another as follows. Computer-readable storage media can be any available storage media that can be accessed by the computer and comprises both volatile and nonvolatile media, removable and non-removable media. By way of example, and not limitation, computer-readable storage media can be implemented in connection with any method or technology for storage of information such as computer-readable instructions, program modules, structured data or unstructured data.

Computer-readable storage media can comprise, but are not limited to, random access memory (RAM), read only memory (ROM), electrically erasable programmable read only memory (EEPROM),flash memory or other memory technology, compact disk read only memory (CD ROM), digital versatile disk (DVD) or other optical disk storage, magnetic cassettes, magnetic tape, magnetic disk storage or other magnetic storage devices or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and comprises any information delivery or transport media. The term "modulated data signal" or signals refers to a signal that has one or more of its characteristics set or changed in such a manner as to encode information in one or more signals. By way of example, and not limitation, communication media comprise wired media, such as a wired network or direct-wired connection, and wireless media such as acoustic, RF, infrared and other wireless media.

With reference again to **FIG. 4****,** the example environment can comprise a computer 402, the computer 402 comprising a processing unit 404, a system memory 406 and a system bus 408. The system bus 408 couples system components including, but not limited to, the system memory 406 to the processing unit 404. The processing unit 404 can be any of various commercially available processors. Dual microprocessors and other multiprocessor architectures can also be employed as the processing unit 404.

The system bus 408 can be any of several types of bus structure that can further interconnect to a memory bus (with or without a memory controller), a peripheral bus, and a local bus using any of a variety of commercially available bus architectures. System memory 406 comprises ROM 410 and RAM 412. A basic input/output system (BIOS) can be stored in a non-volatile memory such as ROM, erasable programmable read only memory (EPROM), EEPROM, which BIOS contains the basic routines that help to transfer information between elements within the computer 402, such as during startup. The RAM 412 can also comprise high-speed RAM such as static RAM for caching data.

The computer 402 further comprises an internal hard disk drive (HDD 414) (e.g., EIDE, SATA), which internal HDD 414 can also be configured for external use in a suitable chassis (not shown), a magnetic floppy disk drive (FDD 416), (e.g., to read from or write to a removable diskette 418) and an optical disk drive 420, (e.g., reading a CD-ROM disk 422 or, to read from or write to other high-capacity optical media such as the DVD). The HDD 414, magnetic FDD 416 and optical disk drive 420 can be connected to the system bus 408 by a hard disk drive interface 424, a magnetic disk drive interface 426 and an optical drive interface 428, respectively. The hard disk drive interface 424 for external drive implementations comprises at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 402, the drives and storage media accommodate the storage of any data in a suitable digital format. Although the description of computer-readable storage media above refers to a hard disk drive (HDD), a removable magnetic diskette, and a removable optical media such as a CD or DVD, it should be appreciated by those skilled in the art that other types of storage media which are readable by a computer, such as zip drives, magnetic cassettes, flash memory cards, cartridges, and the like, can also be used in the example operating environment, and further, that any such storage media can contain computer-executable instructions for performing the methods described herein.

A number of program modules can be stored in the drives and RAM 412, comprising an operating system 430, one or more application programs 432, other program modules 434 and program data 436. All or portions of the operating system, applications, modules, and/or data can also be cached in the RAM 412. The systems and methods described herein can be implemented utilizing various commercially available operating systems or combinations of operating systems.

A user can enter commands and information into the computer 402 through one or more wired/wireless input devices, e.g., a keyboard 438 and a pointing device, such as a mouse 440. Other input devices (not shown) can comprise a microphone, an infrared (IR) remote control, a joystick, a game pad, a stylus pen, touch screen and the like. These and other input devices are often connected to the processing unit 404 through an input device interface 442 that can be coupled to the system bus 408, but can be connected by other interfaces, such as a parallel port, an IEEE 1394 serial port, a game port, a universal serial bus (USB) port, an IR interface, etc.

A monitor 444 or other type of display device can also be connected to the system bus 408 via an interface, such as a video adapter 446. It will also be appreciated that in alternative embodiments, a monitor 444 can also be any display device (e.g., another computer having a display, a smart phone, a tablet computer, etc.) for receiving display information associated with computer 402 via any communication means, including via the Internet and cloud-based networks. In addition to the monitor 444, a computer typically comprises other peripheral output devices (not shown), such as speakers, printers, etc.

The computer 402 can operate in a networked environment using logical connections via wired and/or wireless communications to one or more remote computers, such as a remote computer(s) 448. The remote computer(s) 448 can be a workstation, a server computer, a router, a personal computer, portable computer, microprocessor-based entertainment appliance, a peer device or other common network node, and typically comprises many or all of the elements described relative to the computer 402, although, for purposes of brevity, only a remote memory/storage device 450 is illustrated. The logical connections depicted comprise wired/wireless connectivity to a local area network (LAN 452) and/or larger networks, e.g., a wide area network (WAN 454). Such LAN and WAN networking environments are commonplace in offices and companies, and facilitate enterprise-wide computer networks, such as intranets, all of which can connect to a global communications network, e.g., the Internet.

When used in a LAN networking environment, the computer 402 can be connected to the LAN 452 through a wired and/or wireless communication network interface or adapter 456. The adapter 456 can facilitate wired or wireless communication to the LAN 452, which can also comprise a wireless AP disposed thereon for communicating with the adapter 456.

When used in a WAN networking environment, the computer 402 can comprise a modem 458 or can be connected to a communications server on the WAN 454 or has other means for establishing communications over the WAN 454, such as by way of the Internet. Modem 458, which can be internal or external and a wired or wireless device, can be connected to the system bus 408 via the input device interface 442. In a networked environment, program modules depicted relative to the computer 402 or portions thereof, can be stored in the remote memory/storage device 450. It will be appreciated that the network connections shown are examples and other means of establishing a communications link between the computers can be used.

The computer 402 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, restroom), and telephone. This can comprise Wireless Fidelity (Wi-Fi) and BLUETOOTH^{®} wireless technologies. Thus, the communication can be a predefined structure as with a conventional network or simply an ad hoc communication between at least two devices.

Wi-Fi can allow connection to the Internet from a couch at home, a bed in a hotel room or a conference room at work, without wires. Wi-Fi is a wireless technology similar to that used in a cell phone that enables such devices, e.g., computers, to send and receive data indoors and out; anywhere within the range of a base station. Wi-Fi networks use radio technologies called IEEE 802.11 (a, b, g, n, ac, ag, etc.) to provide secure, reliable, fast wireless connectivity. A Wi-Fi network can be used to connect ordinary skill in the art can recognize that many further combinations and permutations of the present examples are possible. Accordingly, the embodiments disclosed and/or claimed herein are intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

Computing devices typically comprise a variety of media, which can comprise computer-readable storage media and/or communications media, which two terms are used herein differently from one another as follows. Computer-readable storage media can be any available storage media that can be accessed by the computer and comprises both volatile and nonvolatile media, removable and non-removable media. By way of example, and not limitation, computer-readable storage media can be implemented in connection with any method or technology for storage of information such as computer-readable instructions, program modules, structured data or unstructured data. Computer-readable storage media can comprise the widest variety of storage media including tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

In addition, a flow diagram may include a "start" and/or "continue" indication. The "start" and "continue" indications reflect that the steps presented can optionally be incorporated in or otherwise used in conjunction with other routines. In this context, "start" indicates the beginning of the first step presented and may be preceded by other activities not specifically shown. Further, the "continue" indication reflects that the steps presented may be performed multiple times and/or may be succeeded by other activities not specifically shown. Further, while a flow diagram indicates a particular ordering of steps, other orderings are likewise possible provided that the principles of causality are maintained.

As may also be used herein, the term(s) "operably coupled to", "coupled to", and/or "coupling" includes direct coupling between items and/or indirect coupling between items via one or more intervening items. Such items and intervening items include, but are not limited to, junctions, communication paths, components, circuit elements, circuits, functional blocks, and/or devices. As an example of indirect coupling, a signal conveyed from a first item to a second item may be modified by one or more intervening items by modifying the form, nature or format of information in a signal, while one or more elements of the information in the signal are nevertheless conveyed in a manner than can be recognized by the second item. In a further example of indirect coupling, an action in a first item can cause a reaction on the second item, as a result of actions and/or reactions in one or more intervening items.

Although specific embodiments have been illustrated and described herein, it should be appreciated that any arrangement which achieves the same or similar purpose may be substituted for the embodiments described or shown by the subject disclosure. The subject disclosure is intended to cover any and all adaptations or variations of various embodiments when falling within the scope of the appended claims. Combinations of the above embodiments, and other embodiments not specifically described herein, can be used in the subject disclosure. For instance, one or more features from one or more embodiments can be combined with one or more features of one or more other embodiments when falling within the scope of the appended claims.

## Claims

1. A device, comprising:
a processing system including a processor;
a clock; and
a memory that stores executable instructions that, when executed by the processing system, cause the processing system to perform operations comprising:
advertising a capability as a precision timing protocol, PTP, master clock through an Internet Protocol, IP, network, wherein the advertising includes an IP address of the device, wherein the advertising is provided to a first area that includes a first group of nodes comprising the PTP client node and wherein the advertising is not provided to a second area that includes a second group of nodes that does not include the PTP client node;
receiving a unicast signaling request from the PTP client node in the network; and
sending clock messages to the PTP client node responsive to granting the unicast signaling request from the PTP client node.

2. The device of claim 1, wherein the device further comprises a receiver configured to receive time information from a time source and wherein the operations further comprise synchronizing the clock to the time source.

3. The device of claim 1, wherein the advertising is performed via an Interior Gateway Protocol, IGP.

4. The device of claim 3, wherein the device operates as an area border router and locks to candidate master clock nodes in a particular area while advertising as a master clock node for an adjacent area being served.

5. The device of claim 4, wherein the advertising uses a new link state protocol, LSP, data unit.

6. The device of claim 3, wherein the IGP is an Open Shortest Path First.

7. The device of claim 6, wherein the advertising uses an opaque Link State Advertisement, LSA.

8. The device of claim 7, wherein the advertising stays within an Open Shortest Path First, OSPF area of the device.

9. A method comprising:
advertising, by a processing system including a processor of a device, a capability as a precision timing protocol, PTP, master clock through an Internet Protocol, IP, network, wherein the advertising includes an IP address of the device, wherein the advertising is provided to a first area that includes a first group of nodes comprising the PTP client node and wherein the advertising is not provided to a second area that includes a second group of nodes that does not include the PTP client node;
receiving, by the processing system, a unicast signaling request from a PTP client node in the network; and
sending, by the processing system, clock messages to the PTP client node responsive to granting the unicast signaling request from the PTP client node.

10. The method of claim 9, comprising receiving time information from a time source and synchronizing the PTP master clock to the time source.

11. The method of claim 9, wherein the advertising is performed via an Interior Gateway Protocol, IGP.

12. The method of claim 11, wherein the device operates as an area border router and locks to candidate master clock nodes in a particular area while advertising as a master clock node for an adjacent area being served.

13. The method of claim 12, wherein the advertising uses a new link state protocol, LSP, data unit.

## Patentansprüche

1. . Vorrichtung, umfassend:
ein Verarbeitungssystem, das einen Prozessor einschließt;
eine Uhr; und
einen Speicher einschließt, der ausführbare Anweisungen speichert, die, wenn sie von dem Verarbeitungssystem ausgeführt werden, das Verarbeitungssystem veranlasst, Vorgänge auszuführen, die Folgendes umfassen:
Werben einer Fähigkeit als Präzisions-Timing-Protokoll-, PTP-, Masteruhr über ein Internetprotokoll-, IP-, Netzwerk, wobei das Werben eine IP-Adresse der Vorrichtung einschließt, wobei das Werben einem ersten Bereich bereitgestellt wird, der eine erste Gruppe von Knoten einschließt, die den PTP-Client-Knoten umfasst und wobei das Werben nicht einem zweiten Bereich bereitgestellt wird, der eine zweite Gruppe von Knoten einschließt, die den PTP-Client-Knoten nicht einschließt;
Empfangen einer Unicast-Signalisierungsanfrage von dem PTP-Client-Knoten in dem Netzwerk; und Senden von Taktnachrichten an den PTP-Client-Knoten als Reaktion darauf, dass die Unicast-Signalisierungsanfrage von dem PTP-Client-Knoten erteilt wird.

2. . Vorrichtung nach Anspruch 1, wobei die Vorrichtung weiter einen Empfänger umfasst, der zum Empfangen von Zeitinformationen von einer Zeitquelle ausgebildet ist und wobei die Vorgänge weiter das Synchronisieren der Uhr mit der Zeitquelle umfassen.

3. . Vorrichtung nach Anspruch 1, wobei das Werben über ein Interior Gateway Protocol, IGP, durchgeführt wird.

4. . Vorrichtung nach Anspruch 3, wobei die Vorrichtung als Bereichsgrenzenrouter wirkt und auf Kandidaten-Masteruhrknoten in einem bestimmten Bereich sperrt, während sie als Master-Clock-Knoten für einen benachbarten Bereich beworben wird.

5. . Vorrichtung nach Anspruch 4, wobei das Werben eine neue Link-State-Protokoll-, LSP-, Dateneinheit verwendet.

6. . Vorrichtung nach Anspruch 3, wobei der IGP ein Open Shortest Path First ist.

7. . Vorrichtung nach Anspruch 6, wobei das Werben eine opake Link State Advertisement, LSA, verwendet.

8. . Vorrichtung nach Anspruch 7, wobei das Werben innerhalb eines Open Shortest Path First, OSPF-Bereichs der Vorrichtung verbleibt.

9. . Verfahren, umfassend:
Werben durch ein Verarbeitungssystem, das einen Prozessor einer Vorrichtung, eine Fähigkeit als Präzisionszeitprotokoll, PTP, einschließt, Masteruhr über ein Internetprotokoll-, IP-, Netzwerk, wobei die Werbung eine IP-Adresse der Vorrichtung einschließt, wobei das Werben für einen ersten Bereich bereitgestellt wird, der eine erste Gruppe von Knoten einschließt, die den PTP-Client-Knoten umfassen, und wobei das Werben nicht für einen zweiten Bereich bereitgestellt wird, der eine zweite Gruppe von Knoten einschließt, die den PTP-Client-Knoten nicht einschließt;
Empfangen einer Unicast-Signalisierungsanfrage von einem PTP-Client-Knoten in dem Netzwerk durch das Verarbeitungssystem; und
Senden von Taktnachrichten an den PTP-Client-Knoten durch das Verarbeitungssystem als Reaktion darauf, dass die Unicast-Signalisierungsanfrage von dem PTP-Client-Knoten erteilt wird.

10. . Verfahren nach Anspruch 9, umfassend das Empfangen von Zeitinformationen von einer Zeitquelle und das Synchronisieren der PTP-Masteruhr mit der Zeitquelle.

11. . Verfahren nach Anspruch 9, wobei das Werben über ein Interior Gateway Protocol, IGP, durchgeführt wird.

12. . Verfahren nach Anspruch 11, wobei die Vorrichtung als Bereichsgrenzenrouter wirkt und auf Kandidaten-Masteruhrknoten in einem bestimmten Bereich sperrt, während sie als Master-Clock-Knoten für einen benachbarten Bereich beworben wird.

13. . Verfahren nach Anspruch 12, wobei das Werben eine neue Link-State-Protokoll-, LSP-, Dateneinheit verwendet.

## Revendications

1. Dispositif, comprenant :
un système de traitement incluant un processeur ;
une horloge ; et
une mémoire qui stocke des instructions exécutables qui, lorsqu'elles sont exécutées par le système de traitement, amènent le système de traitement à mettre en œuvre des fonctionnements comprenant :
l'annonce d'une capacité en tant qu'horloge maîtresse de protocole de synchronisation de précision, PTP, par le biais d'un réseau de protocole Internet, IP, dans lequel l'annonce inclut une adresse IP du dispositif, dans lequel l'annonce est fournie à une première zone qui comprend un premier groupe de nœuds comprenant le nœud client PTP et dans lequel l'annonce n'est pas fournie à une deuxième zone qui comporte un deuxième groupe de nœuds qui n'inclut pas le nœud client PTP ;
la réception d'une demande de signalisation monodiffusion du nœud client PTP dans le réseau ; et l'envoi de messages d'horloge au nœud client PTP en réponse à l'accord de la demande de signalisation monodiffusion du nœud client PTP.

2. Dispositif selon la revendication 1, dans lequel le dispositif comprend en outre un récepteur configuré pour recevoir des informations temporelles d'une source temporelle et dans lequel les fonctionnements comprennent en outre la synchronisation de l'horloge avec la source temporelle.

3. Dispositif selon la revendication 1, dans lequel l'annonce est mise en œuvre via un protocole de passerelle intérieure, IGP.

4. Dispositif selon la revendication 3, dans lequel le dispositif fonctionne en tant que routeur de frontière de zone et se verrouille aux nœuds d'horloge maîtresse candidats dans une zone particulière tout en faisant l'annonce en tant que nœud d'horloge maîtresse pour une zone adjacente qui est desservie.

5. Dispositif selon la revendication 4, dans lequel l'annonce utilise une nouvelle unité de donnée de protocole d'état de liaison, LSP.

6. Dispositif selon la revendication 3, dans lequel l'IGP est un OSPF (Open Shortest Path First).

7. Dispositif selon la revendication 6, dans lequel l'annonce utilise une annonce d'état de liaison, LSA, opaque.

8. Dispositif selon la revendication 7, dans lequel l'annonce reste dans une zone OSPF (Open Shortest Path First) du dispositif.

9. Procédé comprenant :
l'annonce, par un système de traitement incluant un processeur d'un dispositif, d'une capacité en tant qu'horloge maîtresse de protocole de synchronisation de précision, PTP, via un réseau de protocole Internet, IP, dans lequel l'annonce inclut une adresse IP du dispositif, dans lequel l'annonce est fournie à une première zone qui inclut un premier groupe de nœuds comprenant le nœud client PTP et dans lequel l'annonce n'est pas fournie à une deuxième zone qui inclut un deuxième groupe de nœuds qui n'inclut pas le nœud client PTP ;
la réception, par le système de traitement, d'une demande de signalisation monodiffusion provenant d'un nœud client PTP dans le réseau ; et
l'envoi, par le système de traitement, de messages d'horloge au nœud client PTP en réponse à l'accord de la demande de signalisation monodiffusion du nœud client PTP.

10. Procédé selon la revendication 9, comprenant la réception d'informations temporelles d'une source temporelle et la synchronisation de l'horloge maîtresse PTP avec la source temporelle.

11. Procédé selon la revendication 9, dans lequel l'annonce est mise en œuvre via un protocole de passerelle intérieure, IGP.

12. Procédé selon la revendication 11, dans lequel le dispositif fonctionne en tant que routeur de frontière de zone et se verrouille aux nœuds d'horloge maîtresse candidats dans une zone particulière tout en faisant l'annonce en tant que nœud d'horloge maîtresse pour une zone adjacente qui est desservie.

13. Procédé selon la revendication 12, dans lequel l'annonce utilise une nouvelle unité de donnée de protocole d'état de liaison, LSP.
